# EUROPÄISCHE PATENTSCHRIFT

(11) **EP 4 467 373 B1**
(45) Veröffentlichungstag und Bekanntmachung des Hinweises auf die Patenterteilung: **03.12.2025**
(21) Anmeldenummer: 24174419.2
(22) Anmeldetag: 07.05.2024
(51) Int. Cl.: B60J 7/185

(54) **VERSCHLUSSVORRICHTUNG FÜR EIN VERDECK EINES KRAFTFAHRZEUGES MIT NOCKEN ZUR SICHERUNG DER ÜBERTOTPUNKTLAGE**
CLOSURE DEVICE FOR A MOTOR VEHICLE TOP WITH CAMS FOR SECURING THE OVER-CENTRE POSITION
DISPOSITIF DE VERROUILLAGE POUR CAPOTE DE VÉHICULE AUTOMOBILE AVEC CAME POUR LA SÉCURITÉ DE LA POSITION DE POINT MORT

(30) Priorität: 23.05.2023 DE 102023204794
(43) Veröffentlichungstag der Anmeldung: 27.11.2024
(73) Patentinhaber: Magna Car Top Systems GmbH, 74321 Bietigheim-Bissingen (DE)
(72) Erfinder: BOFINGER, Oliver, 70437 Stuttgart (DE)
(74) Vertreter: Reuter, Silke Beatrix

(56) Entgegenhaltungen:
- DE-A1- 102009 009 595
- DE-A1- 3 725 431
- US-A- 5 435 615

## Beschreibung

Die Erfindung betrifft eine Verschlussvorrichtung für ein Verdeck eines Kraftfahrzeuges, wobei das Verdeck in eine den Fahrzeuginnenraum überdeckende Schließstellung und eine diesen Fahrzeuginnenraum freigebende Ablagestellung bringbar ist, umfassend einen Verriegelungsgriff, welcher bei Betätigung einen Verriegelungshaken entriegelt oder verriegelt.

### Stand der Technik

Eine Verschlussvorrichtung dient zum manuellen Verriegeln bzw. Entriegeln eines zu öffnenden Verdecks, welches manuell oder motorisch in eine Offenstellung bzw. Geschlossen-Stellung gebracht wird.

Im Stand der Technik bekannte Verschlussvorrichtungen benötigen oft einen relativ großen Kraftaufwand zum Verriegeln bzw. Entriegeln. Dabei ist zu beachten, dass der Verschluss zu einer sehr straffen Spannung des Verdecks und des Verdeckbezugs dient und daher die Mechanik darauf ausgelegt ist, dass die Kräfte vom Verschluss aufgebracht werden.

Die Druckschrift DE 10 2015 202 186 B3 zeigt eine Verschlussvorrichtung für ein Verdeck eines Kraftfahrzeuges, umfassend einen Verriegelungsgriff, welcher bei Betätigung einen Verriegelungshaken entriegelt oder verriegelt, wobei der Verriegelungsgriff und ein Betätigungshebel über eine Kulissenbahn und ein erstes Eingriffselement in Eingriff sind, wobei der Verriegelungsgriff um eine erste Drehachse verdrehbar ausgebildet ist, der Betätigungshebel um eine zweite Drehachse verdrehbar ausgebildet ist und der Verriegelungshaken mit dem Betätigungshebel an der zweiten Drehachse verdrehfest verbunden ist, wobei das erste Eingriffselement und die Kulissenbahn derart ausgebildet sind, dass bei Verdrehen des Verriegelungsgriffs um die erste Drehachse das erste Eingriffselement entlang der Kulissenbahn in Richtung eines mechanischen Anschlags geführt wird und bei Erreichen des mechanischen Anschlags der Betätigungshebel um die zweite Drehachse verdreht wird, sodass die Entriegelung des Verriegelungshakens bei Betätigung des Verriegelungsgriffes verzögert erfolgt.

Die EP 0 301 193 B1 zeigt einen Verschluss für ein Verdeck mit einem um eine erste Querachse gelagerten Bedienhebel, sowie ein verschwenkbares Verschlussglied, wobei der Bedienungshebel über wenigstens einen Lenkhebel drehbar mit dem Verschlussglied einerseits mit einer am Lagerbock vorgesehenen Führungsbahn und andererseits mit einem querverlaufenden Bolzen zusammenwirkt, eine zweite Querachse mit einer federbelasteten Sperrklinke, wobei eine Rastnase in diese eingreift.

Der Verriegelungshaken hat einen Freiheitsgrad und kann sich um die Hakenführung drehen. In diesem Fall öffnet sich der Verschluss sofort, sobald die Sperrklinke gedrückt wird.

Die DE 10 2009 009 595 B4 zeigt ein Verschlusssystem für ein Verdeck eines Cabriolet-Fahrzeugs, umfassend ein an einem Windlauf des Cabriolet-Fahrzeugs anlagerbares Dachelement, einen an dem Dachelement aufgenommenen Verriegelungshaken, und eine an dem Windlauf angeordnete Hakenaufnahme. Desweiteren weist das Verschlusssystem an dem Dachelement ein dem Verriegelungshaken zugeordneten Rasthaken auf, welcher mit einer an dem Windlauf vorgesehenen Rastaufnahme in Eingriff bringbar ist. Der Verriegelungshaken weist ein Anschlagelement auf, welches bei einer Verstellung des Verriegelungshakens mit einer Anschlagfläche des Rasthakens in Eingriff bringbar ist. Der Rasthaken ist relativ zu dem Verriegelungshaken verdrehbar.

Die DE 37 25 431 A1 sowie die DE 196 02 185 C1 zeigen einen Verschluss für ein Verdeck eines Fahrzeugs. Diese umfassen einen vedeckseitigen Lagerbock mit einem um eine Querachse gelagerten Bedienungshebel sowie ein verschwenkbares Verschlussglied, das mit einer aufbauseitigen Aufnahme zusammenwirkt.

Es ist Aufgabe der Erfindung eine Verschlussvorrichtung auszubilden, die eine weitere zusätzliche Sicherung gegen ein ungewolltes Öffnen des Verschlusses enthält.

### Beschreibung der Erfindung

Die Aufgabe wird gelöst mit einer Verschlusseinrichtung mit den Merkmalen des Anspruchs 1, genauer mit einer Verschlusseinrichtung für ein bewegliches Dachelement eines Fahrzeugs, mit einem schwenkbar gelagerten Verriegelungshaken, der in der verriegelten Situation das bewegliche Dachelement an einer Aufnahme eines Dachrahmens des Kraftfahrzeugs in der Schließposition verriegelt, einem Betätigungsgriff, der zur Betätigung des Verriegelungshakens über eine Lenkhebelkinematik an dem Verriegelungshaken gekoppelt und über einen Bolzen schwenkbar an dem beweglichen Dachelement angebunden ist, und einer Sperrklinke zur Sicherung der Verschlusseinrichtung gegen ungewolltes Öffnen in einer ersten Öffnungsposition, in der der Verriegelungshaken noch in Eingriff mit einem Dachrahmen ist, wobei die Sperrklinke über eine Schwenkachse an dem Betätigungsgriff schwenkbar gelagert ist, und eine Übertotpunktkinematik zur Sicherung der Verschlusseinrichtung gegen ungewolltes Öffnen, wobei diese zumindest einen an dem Verriegelungshaken ausgebildeten Nocken umfasst, der bei einer Öffnungsbewegung des Verriegelungshakens gegen den Bolzen anschlägt und eine weitere Öffnungsbewegung verhindert.

Hierdurch wird eine doppelte Sicherung der erfindungsgemäßen Verschlusseinrichtung gegen ungewolltes Öffnen erreicht.

Es ist vorteilhaft, dass der Verriegelungshaken eine langgestreckte Grundfläche aufweist, von der aus sich eine Hakenspitze endseitig und zwei Wangen an der anderen Endseite weg erstrecken, wobei an den Wangen beidseitig Nocken angebracht sind, die sich im Bereich ihrer oberen Begrenzung über die Grundfläche des Verriegelungshakens hinaus erstrecken und eine Nockenanlagefläche als Anschlag des Bolzens ausbilden. Durch die Ausführung der Nocken mit Nockenanschlagflächen wird die Übertotpunktlage gewährleistet.

Vorteilhafterweise sind in einer Ausführungsform die Nocken integral, d.h. einstückig mit den Wangen des Verriegelungshakens ausgebildet.

Die Nockenanlagefläche verläuft schräg von der oberen Begrenzung in Richtung auf einen Nockenfuss.

### Beschreibung der Figuren

Es zeigt:
- Figur 1: eine perspektivische Darstellung einer Verschlusseinrichtung,
- Figur 2: die Verschlusseinrichtung der Figur 1 ohne Gehäuse,
- Figur 3: die Verschlusseinrichtung im geschlossenen und verriegelten Zustand,
- Figur 4: die Verschlusseinrichtung in der Situation des Entriegelns in einem ersten Schritt,
- Figur 5: das Ziehen des Betätigungsgriffs als zweiter Schritt beim Öffnen der Verschlusseinrichtung,
- Figur 6: die Verschlusseinrichtung in der vollständig geöffneten Situation,
- Figur 7: eine Verschlusseinrichtung in einem Zustand mit doppelter Sicherung,
- Figur 8: die Verschlusseinrichtung gemäß der Figur 7 in einem anderer Zustand,
- Figur 9: die erfindungsgemäße Verschlusseinrichtung mit zwei Sicherungen; und
- Figur 10: den Verriegelungshaken der erfindungsgemäßen Verschlusseinrichtung als Einzelteil in einer perspektivischen Ansicht.

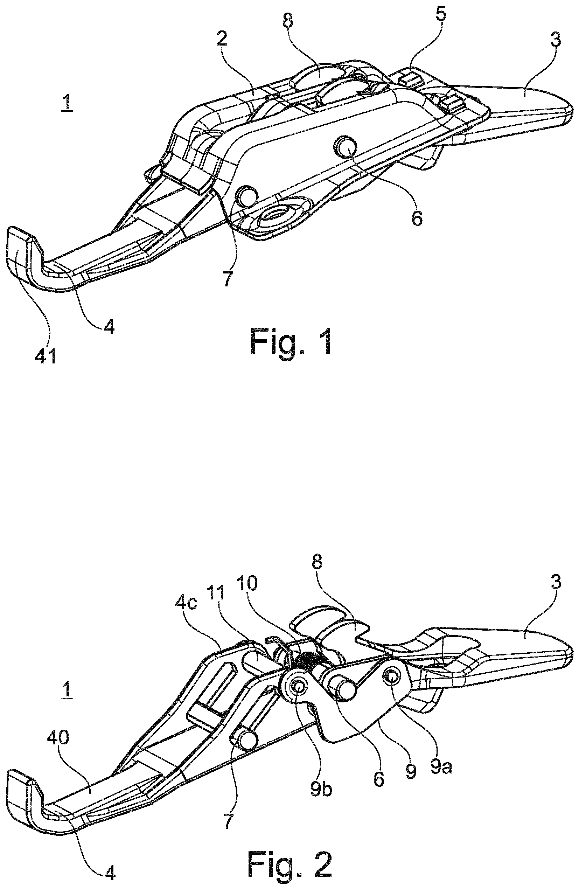

**In** Figur 1 ist eine Verschlusseinrichtung 1 dargestellt, die in einem Gehäuse 2 untergebracht ist. Das Gehäuse 2 weist diverse Öffnungen auf, in denen ein Betätigungsgriff 3, ein Verriegelungshaken 4, sowie ein Teil einer Sperrklinke 8 nach außen ragen.

Figur 2 zeigt die maßgeblichen Bauteile der Verschlusseinrichtung 1 ohne Gehäuse 2. Der Verriegelungshaken 4 weist an seinem vorderen Endbereich einen nach oben abgestellten hakenförmigen Endbereich 41 auf. Der Verriegelungshaken 4 weist zwei parallel beabstandet gegenüberliegende Wangen 4c auf, die sich ausgehend von einer Grundfläche 40 des Verriegelungshakens 4 nach oben erstrecken. Die Grundfläche weist eine Längserstreckung in x-Richtung auf. Die Wangen 4c sind in y- Richtung mit gegenüberliegend ausgerichteten Bohrungen 4b ausgeführt, die zur Aufnahme eines ersten Lagerbolzens 9b dienen. Des Weiteren weist jede Wange 4c eine schräg nach oben ausgeführte schlitzförmige Kulissenführung 4a auf, die zur Aufnahme einer Hakenführung 7 des Verriegelungshakens 4 dient.

Der Betätigungsgriff 3 erstreckt sich in entgegengesetzter Richtung des Verriegelungshakens 4 in x- Richtung aus dem Gehäuse 2 und ist über einen federvorgespannten Bolzen 6 am Gehäuse 2 gelagert. Die Vorspannung wird über eine Feder 10 erzeugt, die der Bolzen 6 trägt. Innerhalb einer mittigen Ausnehmung des Betätigungsgriffs 3 ist eine Sperrklinke 8 verbaut, die über einen zweiten Lagerbolzen 9a am Betätigungsgriff 3 gelagert ist. Die Sperrklinke 8 ist an ihrem ersten Endbereich 8a hakenfömig ausgebildet. Der gegenüberliegende zweite Endbereich 8b ist als Betätigungsbereich ausgeführt.

Des Weiteren umfasst die Verschlusseinrichtung beidseitig angeordnete Lenkhebel 9, die eine gewinkelte Form haben. Die Lenkhebel sind über endseitige Lagerbohrungen an den Lagerbolzen 9a und 9b angebunden. Somit erstrecken sich die Lenkhebel 9 von den Lagerbolzen 9b des Verriegelungshakens 4 bis zu den Lagerbolzen 9a am Betätigungsgriff 3 und koppeln diese Lagerstellen.

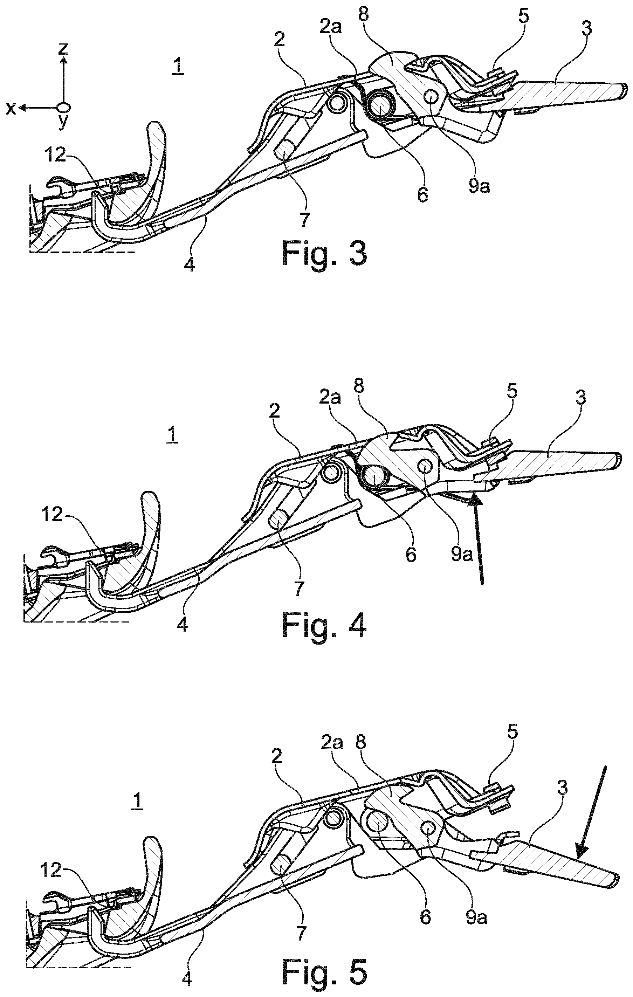

Figur 3 zeigt die Verschlusseinrichtung 1 im geschlossenen und verriegelten Zustand, wobei ein herkömmliches Fahrzeugkoordinatensystem eingezeichnet ist.

Die x-Achse verläuft entlang der Fahrzeuglängsachse und zeigt in Fahrtrichtung, die y-Achse verläuft entlang der Fahrzeugquerachse und die z-Achse verläuft entlang der Fahrzeughochachse und zeigt nach oben. In der Beschreibung der Erfindung werden die oben aufgeführten Richtungsangaben verwendet, ohne dass die Erfindung auf genaue Fahrzeugrichtungen eingeschränkt wäre.

Der nach oben in z-Richtung abgestellte, hakenförmige Endbereich 41 des Verriegelungshakens 4, wirkt bei verriegeltem Verdeck mit einer Aufnahme 12 im Dachrahmen formschlüssig zusammen. Hierbei ist der hakenförmige Endbereich 41 durch eine rechteckförmige Öffnung im Dachrahmen hindurchgeführt. Eine weitere Sicherung im verriegelten Zustand wird über die Sperrklinke 8 erreicht, die sich mit ihrem hakenfömigen ersten Endbereich 8a durch eine Öffnung 2a des Gehäuses 2 hindurch nach außen erstreckt und mit ihrer Klinkenspitze auf der Außenfläche des Gehäuses 2 anliegt.

Figur 4 zeigt den Zustand, in dem die Verschlusseinrichtung entriegelt wird. Zum Entriegeln der Verschlusseinrichtung 1 muss als erstes die Sperrklinke 8 an dem Betätigungsbereich nach oben gedrückt werden, was mit dem Pfeil angedeutet wird. Dabei wird die Sperrklinke 8 um den Lagerbolzen 9a gegen den Betätigungsgriff 3 gedreht. Der hakenförmige Endbereich 8a verschwenkt sich durch die Öffnung 2a des Gehäuses 2 nach innen/unten in das Gehäuse 2. In diesem Status wird der Betätigungsgriff 3 nicht bewegt.

In Figur 5 ist der Zustand dargestellt, der durch das Betätigen des Betätigungsgriffs 3 in Richtung des Pfeils nach unten entsteht. Der Betätigungsgriff 3 dreht sich um den Bolzen 6 und nimmt die Sperrklinke 8 und den Lenkhebel 9 mit. Der hakenförmige Endbereich 8a der Sperrklinke 8 liegt innerhalb des Gehäuses 2. Über den Lenkhebel 9 bewegt sich der Verriegelungshaken 4 um den Lagerbolzen 9b. Dabei wird der Verriegelungshaken 4 durch die Kulissenführung (Kulisse 4/Hakenführung 7) in seiner Bewegung zwangsgeführt verschwenkt.

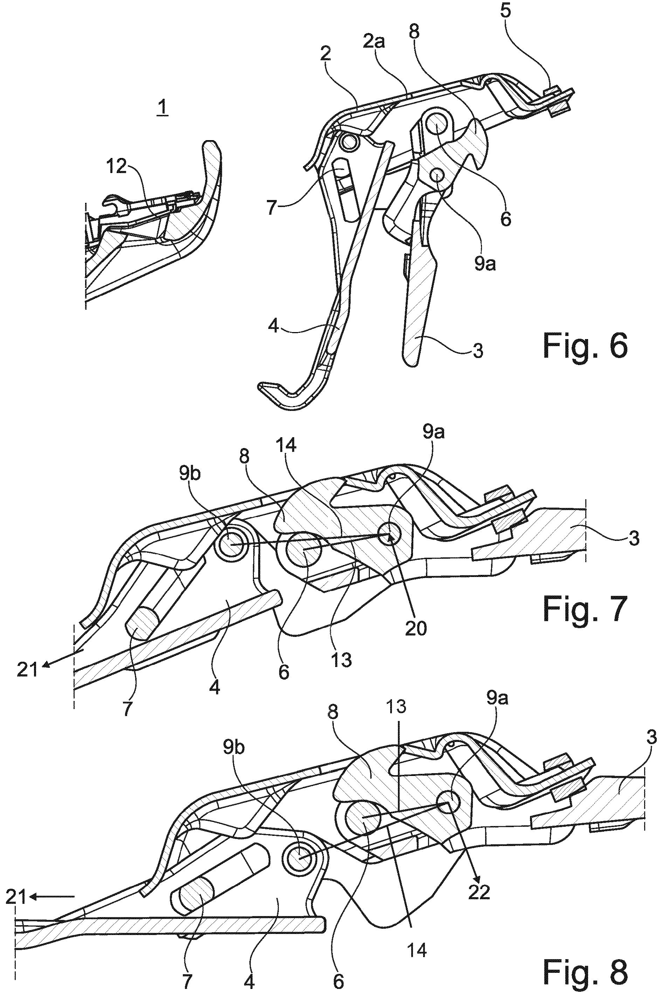

Figur 6 zeigt die Verschlusseinrichtung 1 in vollständig geöffnetem Zustand.

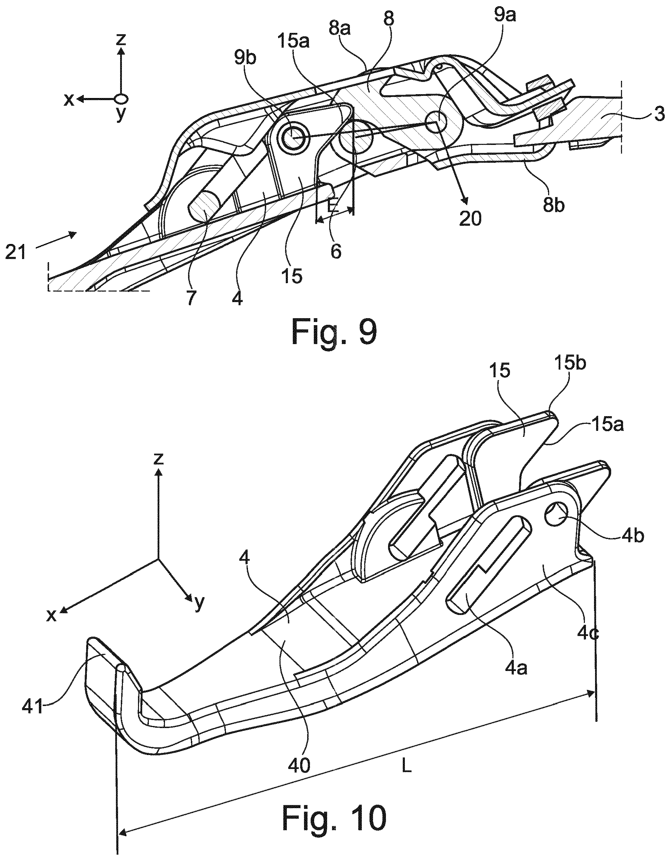

Die Figuren 7 bis 8 zeigen das Verhalten der beschriebenen Verschlusseinrichtung 1 ohne die Erfindung. Figur 9 zeigt die doppelte Sicherung der erfindungsgemäßen Verschlusseinrichtung 1 gegen ungewolltes Öffnen.

In Figur 7 ist die Situation dargestellt, wenn am Verriegelungshaken 4 eine Zugkraft 21 anliegt. Der Verschluss bewegt sich dann mit der Schließkraft 20 in eine Richtung, die das Verschließen unterstützt. Schematisch eingezeichnet sind eine Verbindungslinie 13 von der Drehachse des Lagerbolzens 9a zur Drehachse des Bolzens 6. Weiterhin eingezeichnet ist eine Verbindungslinie 14 von der Drehachse des Lagerbolzen 9a zur Drehachse des Lagerbolzens 9b.

Beide Drehachsen der Lagerbolzen 9a und 9b liegen oberhalb der Drehachse des Bolzens 6, so dass eine Übertotpunktlage entstanden ist. Die Verbindungslinie 14 liegt oberhalb der Verbindungslinie 13.

Figur 8 zeigt die Situation, die bei der Ausführung der Verschlusseinrichtung 1 gemäß dem Stand der Technik zu Problemen führen kann. Der Verriegelungshaken 4 hat einen Freiheitsgrad und kann sich um die Hakenführung 7 drehen. Man erkennt, dass der Lagerbolzen 9b für den Verriegelungshaken 4 unterhalb des Bolzens 6 liegt und die Übertotpunktlage sich aufgelöst hat. Die Verbindungslinie 14 liegt unterhalb der Verbindungslinie 13. Eine Öffnungskraft 22 tritt entgegen der Schließkraft auf.

In diesem Fall öffnet sich die Verschlusseinrichtung 1 sofort, sobald die Sperrklinke 8 betätigt wird. Demnach hat die Verschlusseinrichtung 1 des Standes der Technik in der gezeigten Situation nur eine Sicherung gegen ungewolltes Öffnen.

Hier setzt die erfindungsgemäße Lösung der Verschlusseinrichtung 1an. Dazu wird, wie in der Figur 10 dargestellt ist, der Verriegelungshaken 4 baulich um Nocken 15 an Wangen 4c ergänzt. Die Nocken 15 bilden Flügel aus, die sich an den Bohrungen 4b anschließen. Die Nocken 15 bilden des Weiteren eine Nockenspitze 15b und eine Nockenanlagefläche 15a aus. Die Nocken 15 weisen einen Nockenfuß 15c auf, der mit einer Grundfläche 40 des Verriegelungshakens 4 verbunden ist. Sowohl die Wangen 4c als auch die Nocken 15 erstrecken sich senkrecht zur Grundfläche 40 in z-Richtung. Der hakenförmige Endbereich 41 erstreckt sich ebenfalls in etwa der z-Richtung.

Die Nockenspitze 15b weist eine Erstreckung E in Fahrzeuglängsrichtung auf und ist derart ausgeführt, dass sie in x-Richtung die Längserstreckung L der Grundfläche 40 des Verriegelungshakens 4 übersteigt.

Die Nocken 15 können auch integral, d.h. einteilig mit dem Verriegelungshaken 4 hergestellt sein.

Zudem ist es auch möglich nur mit einem Nocken 15 an einer Wange 4c des Verriegelungshakens 4 zu arbeiten.

Figur 9 zeigt das Verhalten des Verriegelungshakens 4 mit der erfindungsgemäßen Ausführung der Nocken 15. Durch das Anbringen der Nocken 15 kann sich der Verriegelungshaken 4 bei Einleiten einer Zugkraft 21 nur bis maximal zum Bolzen 6 bewegen und liegt dann über die Nockenanlagefläche 15a am Bolzen 6 von oben gesehen auf. Ein weiteres Verschwenken des Verriegelungshakens 4 wird in dieser Situation unterbunden, wodurch eine Verriegelung des

Verriegelungshakens 4 über seinen hakenförmigen Endbereich 41 im Dachrahmen erhalten bleibt. Dadurch ist immer eine Übertotpunktlage gewährleistet und die Anordnung hat dadurch ein schließendes Moment mit der Schließkraft 20. Die erfindungsgemäße Lösung erzielt somit eine doppelte Sicherung gegen ungewolltes Öffnen.

Der grundsätzliche Aufbau der Verschlusseinrichtung 1 entspricht dem zu den Figuren 1 - 6 beschriebenem Aufbau, einziger Unterschied ist die zu den Figuren 9 und 10 beschriebene Ausgestaltung des Verriegelungshakens 4 mit Nocken 15 und Nockenanlagefläche 15a.

### Bezugszeichen

- 1: Verschlusseinrichtung
- 2: Gehäuse,
- 2a: Öffnung
- 3: Betätigungsgriff
- 4: Verriegelungshaken
- 4a: Kulisse,
- 4b: Bohrung
- 5: Puffer
- 6: Bolzen
- 7: Hakenführung
- 8: Sperrklinke
- 9: Lenkhebel
- 9a, 9b: Lagerbolzen
- 10: Feder
- 11: Drehbolzen
- 12: Aufnahme
- 13: Verbindungslinie Anlenkpunkt 9a zu Bolzen 6
- 14: Verbindungslinie Anlenkpunkt 9a zu Anlenkpunkt 9b
- 15: Nocken
- 15a: Nockenanlagefläche
- 15b: Nockenspitze
- 15c: Nockenfuß
- 20: Schließkraft
- 21: Zugkraft
- 22: Öffnungskraft
- 40: Grundfläche
- 41: hakenförmige Endbereich

## Patentansprüche

1. Verschlusseinrichtung (1) für ein bewegliches Dachelement eines Fahrzeugs, mit einem schwenkbar gelagerten Verriegelungshaken (4), der in der verriegelten Situation das bewegliche Dachelement an einer Aufnahme (12) eines Dachrahmens des Kraftfahrzeugs in der Schließposition verriegelt, einem Betätigungsgriff (3), der zur Betätigung des Verriegelungshakens (4) über eine Lenkhebelkinematik mit Lenkhebel (9) an dem Verriegelungshaken (4) koppelt und über einen Bolzen (6) schwenkbar an dem beweglichen Dachelement angebunden ist, und einer Sperrklinke (8) zur Sicherung der Verschlusseinrichtung (1) gegen ungewolltes Öffnen in einer ersten Öffnungsposition, in der der Verriegelungshaken (4) noch in Eingriff mit dem Dachrahmen ist, wobei die Sperrklinke (8) über eine Schwenkachse eines Lagerbolzens (9a) an dem Betätigungsgriff (3) schwenkbar gelagert ist, und eine Übertotpunktkinematik zur Sicherung der Verschlusseinrichtung gegen ungewolltes Öffnen, wobei die Übertotpunktkinematik zumindest einen an dem Verriegelungshaken (4) ausgebildeten Nocken (15) umfasst, der bei einer Öffnungsbewegung des Verriegelungshakens (4) gegen den Bolzen (6) anschlägt und eine weitere Öffnungsbewegung und Lösen der Verriegelung des Verriegelungshakens (4) verhindert.

2. Verschlusseinrichtung nach Anspruch 1, **dadurch gekennzeichnet, dass** der Verriegelungshaken (4) eine Grundfläche (40) mit einer Längserstreckung aufweist, von der aus sich eine hakenartiger Endbereich (41) und zwei an dem gegenüberliegenden Endbereich der Grundfläche (40) angeordneten Wangen (4c) in Fahrzeugrichtung nach oben (z-Richtung) erstrecken, wobei im Bereich oder an den Wangen (4c) einseitig oder beidseitig Nocken (15) angebracht sind, die sich im Bereich ihrer oberen Begrenzung über die Grundfläche (40) des Verriegelungshakens hinaus mit einer Erstreckung (E) erstrecken und eine Nockenanlagefläche (15a) als Anschlag des Bolzens (6) ausbilden.

3. Verschlusseinrichtung nach Anspruch 2, **dadurch gekennzeichnet, dass** der mindestens eine Nocken (15) einteilig mit den Wangen des Verriegelungshakens (4) ausgebildet ist.

4. Verschlusseinrichtung nach Anspruch 2, **dadurch gekennzeichnet, dass** die Nockenanlagefläche (15a) schräg von der oberen Begrenzung in Richtung auf einen Nockenfuss (15c) verläuft.

5. Verschlusseinrichtung (1) nach Anspruch 2, **dadurch gekennzeichnet, dass** die Wangen (4c) in y- Richtung mit gegenüberliegend ausgerichteten Bohrungen (4b) ausgeführt sind, die zur Aufnahme eines Lagerbolzens (9b) dienen.

6. Verschlusseinrichtung (1) nach Anspruch 2 oder 5, **dadurch gekennzeichnet, dass** jede Wange (4c) eine schräg nach oben ausgeführte schlitzförmige Kulissenführung (4a) aufweist, die zur Aufnahme einer Hakenführung (7) und zwangsgeführten Bewegung des Verriegelungshakens (4) dient.

7. Verschlusseinrichtung (1) nach einem der vorangehenden Ansprüche, **dadurch gekennzeichnet, dass** der Lagerbolzen (9a) der Sperrklinke (8) mit dem Lagerbolzen (9b) des Verriegelungshakens (4) über den Lenkhebel (9) gekoppelt sind.

## Claims

1. Closure device (1) for a movable roof element of a vehicle, having a pivotably mounted locking hook (4) which, in the locked situation, locks the movable roof element in the closed position at a recess (12) of a roof frame of the motor vehicle, having an actuating handle (3) which, for the purpose of actuating the locking hook (4), couples to the locking hook (4) via a link-lever mechanism with a link lever (9) and is connected pivotably to the movable roof element via a pin (6), and having a pawl (8) for securing the closure device (1) against unwanted opening in a first open position, in which the (4) locking hook still engages with the roof frame, wherein the pawl (8) is mounted pivotably on the actuating handle (3) via a pivot axis of a bearing pin (9a), and a beyond-dead-centre kinematic mechanism for securing the closure device against unwanted opening, wherein the beyond-dead-centre kinematic mechanism comprises at least one cam (15) which is formed on the locking hook (4) and which, during an opening movement of the locking hook (4), abuts against the pin (6) and prevents a further opening movement and a release of the locking of the locking hook (4).

2. Closure device according to Claim 1, **characterized in that** the locking hook (4) has a base surface (40) with a longitudinal extent from which a hook-like end region (41) and two side walls (4c) arranged on the oppositely situated end region of the base surface (40) extend upwards in the vehicle direction (z direction), wherein, in the region or to the side walls (4c), there are attached, on one side or on both sides, cams (15) which, in the region of their upper boundary, extend beyond the base surface (40) of the locking hook by an extent (E) and form a cam abutment surface (15a) as a stop of the bolt (6).

3. Closure device according to Claim 2, **characterized in that** the at least one cam (15) is formed in one piece with the side walls of the locking hook (4).

4. Closure device according to Claim 2, **characterized in that** the cam abutment surface (15a) extends obliquely from the upper boundary in the direction of a cam foot (15c).

5. Closure device (1) according to Claim 2, **characterized in that**, in the y direction, the side walls (4c) are designed with oppositely aligned bores (4b) which serve for receiving a bearing pin (9b).

6. Closure device (1) according to Claim 2 or 5, **characterized in that** each side wall (4c) has an obliquently upwardly formed slot-like sliding-block guide (4a) which serves for receiving a hook guide (7) and for positively guided movement of the locking hook (4).

7. Closure device (1) according to one of the preceding claims, **characterized in that** the bearing pin (9a) of the pawl (8) is coupled to the bearing pin (9b) of the locking hook (4) via the link lever (9).

## Revendications

1. Dispositif de fermeture (1) pour un élément de toit mobile d'un véhicule, avec un crochet de verrouillage (4) monté de manière à pouvoir pivoter, qui verrouille, dans la situation verrouillée, l'élément de toit mobile sur un logement (12) d'un cadre de toit du véhicule à moteur dans la position de fermeture, une poignée d'actionnement (3), qui, pour actionner le crochet de verrouillage (4), est couplée à un levier de direction (9) sur le crochet de verrouillage (4) par une cinématique de levier de direction et est attachée de manière à pouvoir pivoter sur l'élément de toit mobile par un boulon (6), et un loquet de blocage (8) destiné à empêcher toute ouverture involontaire du dispositif de fermeture (1) dans une première position d'ouverture, dans laquelle le crochet de verrouillage (4) est encore en prise avec le cadre de toit, le loquet de blocage (8) étant monté de manière à pouvoir pivoter sur la poignée d'actionnement (3) par un axe de pivotement d'un boulon de palier (9a), et une cinématique à passage de point mort destinée à empêcher toute ouverture involontaire du dispositif de fermeture, la cinématique à passage de point mort comprenant au moins une came (15) réalisée sur le crochet de verrouillage (4), qui vient buter contre le boulon (6) lors d'un déplacement d'ouverture du crochet de verrouillage (4) et empêche un autre déplacement d'ouverture et un desserrage du verrouillage du crochet de verrouillage (4).

2. Dispositif de fermeture selon la revendication 1, **caractérisé en ce que** le crochet de verrouillage (4) comporte une surface de base (40) avec une extension longitudinale, depuis laquelle une zone d'extrémité (41) de type crochet et deux joues (4c) disposées sur la zone d'extrémité opposée de la surface de base (40) s'étendent dans le sens du véhicule vers le haut (direction z), des cames (15), qui s'étendent avec une extension (E) au-delà de la surface de base (40) du crochet de verrouillage dans la zone de leur limite supérieure et forment une surface d'appui (15a) de came en tant que butée du boulon (6), étant installées d'un côté ou des deux côtés dans la zone ou sur les joues (4c).

3. Dispositif de fermeture selon la revendication 2, **caractérisé en ce que** l'au moins une came (15) est formée en une partie avec les joues du crochet de verrouillage (4).

4. Dispositif de fermeture selon la revendication 2, **caractérisé en ce que** la surface d'appui (15a) de came s'étend de manière oblique depuis la limite supérieure en direction d'un pied (15c) de came.

5. Dispositif de fermeture (1) selon la revendication 2, **caractérisé en ce que** les joues (4c) sont réalisées dans la direction y avec des alésages (4b) orientés de manière opposée, qui servent à loger un boulon de palier (9b).

6. Dispositif de fermeture (1) selon la revendication 2 ou 5, **caractérisé en ce que** chaque joue (4c) comporte un guidage de coulisse (4a) en forme d'entaille réalisé de manière oblique vers le bas, qui sert à loger un guidage de crochet (7) et à déplacer par guidage forcé le crochet de verrouillage (4).

7. Dispositif de fermeture (1) selon l'une des revendications précédentes, **caractérisé en ce que** le boulon de palier (9a) du loquet de blocage (8) est couplé au boulon de palier (9b) du crochet de verrouillage (4) par le levier de direction (9).
